# EUROPÄISCHE PATENTSCHRIFT

(11) **EP 3 447 302 B1**
(45) Veröffentlichungstag und Bekanntmachung des Hinweises auf die Patenterteilung: **08.12.2021**
(21) Anmeldenummer: 18184330.1
(22) Anmeldetag: 19.07.2018
(51) Int. Cl.: F04D 29/041, F04D 29/042, F04D 29/14

(54) **WELLENLAGERVORRICHTUNG MIT ABHEBEVORRICHTUNG**
SHAFT BEARING DEVICE WITH LIFTING DEVICE
DISPOSITIF FORMANT PALIER D'ARBRE DOTÉ DU DISPOSITIF DE LEVAGE

(30) Priorität: 23.08.2017 EP 17187563
(43) Veröffentlichungstag der Anmeldung: 27.02.2019
(73) Patentinhaber: Sulzer Management AG, 8401 Winterthur (CH)
(72) Erfinder: Wild, Andreas, 76646 Bruchsal (DE); Lagas, Nicolas, Portland, OR 97214 (US)
(74) Vertreter: IPS Irsch AG

(56) Entgegenhaltungen:
- DE-C- 886 250
- DE-U1- 8 104 909

## Beschreibung

Die Erfindung betrifft eine Wellenlagervorrichtung mit einer integrierten Abhebevorrichtung gemäss dem Oberbegriff des unabhängigen Anspruchs 1. Die Erfindung betrifft weiter eine Pumpe mit einer erfindungsgemässen Wellenlagervorrichtung gemäss dem Oberbegriff des unabhängigen Anspruchs 12.

Lager kommen überall dort zur Anwendung, wo Kräfte, die in bestimmte Richtungen wirken, kompensiert bzw. Bewegungen eines Objektes in die unerwünschten Richtungen verhindert werden müssen. In Pumpen werden hierbei im Wesentlichen zwei Arten von Lagern verwendet, Radial- und Axiallager.

Beim Betrieb von Kreiselpumpen entsteht ein Axialschub, der in Richtung Saugseite wirkt. Um diesen Schub aufzuheben, ist an der Druckseite der Welle eine Entlastungsscheibe eingebaut, deren Funktion vom Pumpendruck abhängt. Wenn die Förderflüssigkeit nicht den nötigen Druck aufweist, z. B. beim An- oder Abfahren der Pumpe, kann es zu Berührungen von Entlastungsscheibe und -Gegenscheibe kommen. Dies verursacht Verschleiss, der schliesslich den Ausfall der Anlage zur Folge haben kann. Um die kritischen Phasen beim An- und Abfahren zu überbrücken werden Abhebevorrichtungen verwendet. Da die Entlastungsscheiben im Stillstand des Pumpenaggregates aufeinanderliegen, kommt es bei geringen Drehzahlen, d. h. beim An- und Abfahren des Pumpenaggregates zur Berührung und somit zu Verschleisserscheinungen. Der Grund dafür ist, dass sich noch kein hydraulisch stabiles Kräfteverhältnis an den Entlastungsscheiben einstellen und somit auch kein Entlastungsspalt entstehen kann. Um ein berührungsloses An- oder Abfahren des Pumpenaggregates zu gewährleisten, wird durch Abhebevorrichtungen eine Verschiebung der Pumpenwelle und somit ein Spalt erzeugt.

Aus der EP 0 694 696 B1 sind Kreiselpumpen mit einer Abhebevorrichtung bekannt. Diese erzeugen einen Axialschub auf eine axial verschiebbare Rotorwelle einer Kreiselpumpe, Die Vorrichtung besteht aus einem ersten, mit der Rotorwelle verbindbaren Körper, der einen Permanentmagneten aufweist, sowie einen ortsfest angeordneten zweiten Permanentmagneten, wobei die beiden Permanentmagnete derart gegenseitig zugeordnet sind, dass die wirkenden magnetischen Kräfte die Rotorwelle in einer Ruhelage halten, oder bei einer durch den Betrieb der Kreiselpumpe verursachten Verschiebung aus der Ruhelage derart auf die Rotorwelle wirken, dass sie eine zur Verschiebungsrichtung entgegengesetzte Kraft erzeugen. Nachteil dieser Lösung sind die hohen Kosten die damit verbunden sind, welche durch die teuren Permanentmagnete zustande kommen.

Aus der EP 0 355 796 A2 ist eine Kreiselpumpe mit einer Abhebevorrichtung und einem elektromagnetischen Lager bekannt. Entlastungsvorrichtungen werden seit langer Zeit verwendet, um bei einer laufenden Kreiselpumpe den Axialschub auszugleichen. Eine typische Entlastungsvorrichtung einer Kreiselpumpe umfasst eine rotierende Entlastungsscheibe und eine feststehende Entlastungsgegenscheibe, die einen in radialer Richtung verlaufenden Spalt bilden, durch den ein Teil des in der Kreiselpumpe unter Druck stehenden Fluides gegen aussen abfliesst. Dadurch wird die Welle der Kreiselpumpe in axialer Richtung in einem Gleichgewichtszustand gehalten zwischen der durch den Axialschub bewirkten Kraft und der durch die Entlastungsvorrichtung bewirkte Gegenkraft. Beim Betrieb der Kreiselpumpe können Übergangsphasen auftreten, zum Beispiel beim Anlaufen oder Abstellen, während denen das Fluid einen geringen Druck aufweisen kann, sodass die Welle nicht in einem Gleichgewichtszustand gehalten werden kann. In einer solchen Übergangssituation besteht die Gefahr, dass die beiden Scheiben der Entlastungsvorrichtung sich gegenseitig berühren, was diese beschädigen könnte. Um derartige Schäden zu vermeiden, wird während der Übergangsphase oder während dem Stillstand der Kreiselpumpe mittels eines angesteuerten Elektromagneten derart auf die axiale Lage der Welle eine Kraft ausgeübt, dass sich die beiden Scheiben der Entlastungsvorrichtung nicht berühren.
Diese bekannte Vorrichtung weist den Nachteil auf, dass die axiale Lage der Welle mit einem Sensor zu erfassen ist und mit Hilfe ansteuerbarer Elektromagneten zu regeln ist. Die bekannte Vorrichtung weist den weiteren Nachteil auf, dass der maximal mögliche Verschiebungsweg in axialer Richtung sehr klein ist.

Aus der WO 2015/074903 ist ein Entlastungselement bekannt, welches drehfest mit der Welle gekoppelt ist. Mit dem Gegenelement wird ein Drosselspalt gebildet, indem am Gegenelement eine Einrichtung zur Abstandshaltung des Entlastungselements vom Gegenelement angeordnet. Die Einrichtung zur Abstandshaltung besitzt ein Kraftelement, bevorzugt eine Feder, welche eine Kraft entgegengerichtet zum Axialschub erzeugt. Diese bekannte Vorrichtung weist den Nachteil auf, dass der Austausch von Verschleissteilen wie dem Krafterzeugungselement aufwendig ist.

Die DE886250 beschreibt eine Abhebevorrichtung für eine Pumpe, welche ein Axial-Wälzlager umfasst, wobei eine Feder so an dem Axial-Wälzlager angeordnet ist, dass in einem Einbauzustand der Abhebevorrichtung eine Kraft derart auf das Axial-Wälzlager übertragbar ist, dass in einem Anfahr-/ Abfahrzustand der Pumpe, ein an der Pumpenwelle befestigtes Abhebeelement und ein korrespondierendes Gegenelement voneinander getrennt sind.

Ein wesentlicher Nachteil der aus dem Stand der Technik bekannten Abhebevorrichtungen ist, dass durch bestimmte Vorrichtungen die Baulänge der Pumpe vergrössert wird und ein gesondertes Gehäuse nötig ist oder die Vorrichtungsgeometrie aufwendig und teuer ist.

Aufgabe der Erfindung ist es daher, eine Wellenlagervorrichtung mit einer Abhebevorrichtung mit einfachem konstruktivem Design bereitzustellen, die zur einfachen und kosteneffektiven Herstellung geeignet sind und die gleichzeitig in axialen Lageranordnung zur Aufnahme hoher Drucklasten eingesetzt werden können, wobei die aus dem Stand der Technik bekannten nachteiligen Wirkungen und hohen Kosten vermieden werden.

Diese Aufgabe wird durch eine Wellenlagervorrichtung mit den Merkmalen des unabhängigen Anspruchs 1 zur Anwendung bei einer Pumpe nach dem Anspruch 11 gelöst.

Die abhängigen Ansprüche beziehen sich auf besonders vorteilhafte Ausführungsformen der Erfindung.

Erfindungsgemäss wird eine Wellenlagervorrichtung für eine Pumpe vorgeschlagen. Hierbei umfasst die Wellenlagervorrichtung ein mit einer axial verschiebbaren Pumpenwelle verbindbares Wälzlager. Eine Feder ist so an dem Wälzlager angeordnet, dass in einem Einbauzustand der Wellenlagervorrichtung mittels der Feder eine Federkraft derart auf das Wälzlager übertragbar ist, dass in dem Anfahrzustand und/oder Abfahrzustand der Pumpe, ein an der Welle befestigtes Abhebeelement und ein korrespondierendes Gegenelement voneinander getrennt sind. Die Feder ist insbesondere so am Wälzlager angeordnet, dass die Federkraft F parallel zur Achse der Pumpenwelle wirkt. Die Feder ist somit so am Wälzlager angebracht, dass eine Federkraft F auf den Aussenring des Wälzlagers wirkt, sodass ein Axialschub der Pumpenwelle im Ab- und/oder Anfahrzustand kompensiert werden kann. Durch die Federkraft der Feder sind ein an der Pumpenwelle befestigtes Abhebeelement und ein korrespondierendes Gegenelement im Anfahrzustand und/oder Abfahrzustand voneinander getrennt. Nach dem Anfahrzustand, wenn die Selbstschmierung der Pumpe angelaufen ist, bildet sich ein Schmiermittelfilm zwischen dem Abhebeelement und dem Gegenelement, sodass das Abhebeelement und Gegenelement im wesentlichen verschleissfrei unter Vermittlung eines sich dazwischen befindlichen Schmierfilms eines Schmierfluids aufeinander laufen können. In der Praxis kann die Pumpe eine Kreiselpumpe, insbesondere eine ein- oder mehrstufige Kreiselpumpe sein.

In der Praxis kann die Wellenlagervorrichtung auf der Antriebsseite und/oder auf der Nichtantriebsseite angeordnet sein.

Wesentlich für die Erfindung ist daher, dass das Wälzlager so an der Pumpenwelle angebracht ist, dass über die Feder ein axialer Druck auf die Pumpenwelle ausgeübt werden kann, sodass durch den axialen Druck der Feder das Abhebeelement und das Gegenelement im Anfahrzustand voneinander getrennt sind um eine Abnutzung des Abhebeelements und des Gegenelements wegen mangelnder Schmierung vorzubeugen.

Besonders vorteilhaft kann das Lagergehäuse des Wälzlagers und/oder ein am Wälzlager angeordneter Druckring eine Druckfläche besitzen, auf welcher die Federkraft wirken kann.

In der Praxis ist die Feder zwischen dem Wälzlager und dem Gehäuse angebracht, damit die Federkraft wirken kann.

Entscheidend ist, dass eine Abhebevorrichtung in der Wellenlagervorrichtung integriert ist und somit vorzugsweise kein zusätzliches Gehäuse für eine separate Abhebevorrichtung benötigt wird.

In der Praxis ist das Abhebeelement mit der Welle drehfest verbunden das Gegenelement stationär, also unbeweglich, mit dem Pumpengehäuse verbunden, sodass durch axiale Bewegung der Pumpenwelle eine Verschiebung von dem Abhebeelement gegen das Gegenelement erfolgt.

Entscheidend für die Erfindung ist, dass das Wälzlager ein Radiallager ist.

Unter einem Axialschub ist im Folgenden im Allgemeinen die Wirkung einer Kraft zu verstehen, welche in axialer Richtung auf die Pumpenwelle wirkt und welche durch die Rotation der Pumpenräder hervorgerufen wird. Unter einer Feder ist im Folgenden im Allgemeinen eine Feder, insbesondere eine Spiralfeder, im Speziellen eine Tellerfeder, zu verstehen welche eine mit der Federkonstante korrelierende Federkraft ausübt. Unter einem Druckring ist im Folgenden im Allgemeinen ein scheibenförmiger Ring, insbesondere ein scheibenförmiger Kreisring zu verstehen, welcher im Lagergehäuse des Wälzlagers um die Pumpenwelle angeordnet ist und in der Regel aus einem geeigneten Metall oder einem anderen geeigneten Werkstoff hergestellt ist, so dass die axial wirkenden Federkräfte mittels des Druckrings geeignet über den Umfang des Druckrings auf den Aussenring der Wälzlagers übertragen werden können. Unter einer Federkraft ist im Folgenden im Allgemeinen eine Kraft zu verstehen, welche durch eine Feder, insbesondere eine Spiralfeder, im Speziellen eine Tellerfeder, hervorgerufen wird und über das Wälzlager, im Speziellen über den Druckring und das Wälzlagers auf die Pumpenwelle entgegen dem Axialschub wirkt. Unter einem Anfahrzustand ist im Folgenden im Allgemeinen der Zustand der Pumpe zu verstehen, in welchem die Pumpe gestartet wird und hochfährt, insbesondere der Zustand in welchem noch kein Schmiermittelfilm zwischen dem Gegenelement und dem Abhebeelement ausgebildet ist, insbesondere der Zustand in welchem die Federkraft in derart grösser als der Axialschub ist, dass das Abhebeelement und das Gegenelement voneinander getrennt sind. Unter einem Abfahrzustand ist im Folgenden im Allgemeinen der Zustand der Pumpe zu verstehen, in welchem die Pumpe gestoppt wird und herunterfährt, insbesondere der Zustand in welchem der Schmiermittelfilm zwischen dem Gegenelement und dem Abhebeelement abnimmt, insbesondere der Zustand in welchem die Federkraft in derart grösser als der Axialschub ist, dass das Abhebeelement und das Gegenelement voneinander getrennt sind. Unter einem Schmierfluid ist im Folgenden im Allgemeinen ein Fluid mit Schmiereigenschaften zu verstehen, insbesondere kann ein Schmierfluid auch ein Schmiermittel sein. In der Praxis ist ein Schmierfluid unmittelbar das gepumpte Produkt oder in speziellen Fällen ein separates Schmierfluid. Unter einem Wellenlager ist im Folgenden im Allgemeinen ein Lager zu verstehen, welches Axialkräfte und Radialkräfte aufnehmen kann.

Die Vorteile der erfindungsgemässen Pumpe und der erfindungsgemässen Wellenlagervorrichtung beziehungsweise Abhebevorrichtung sind insbesondere:
- konstruktiv einfach ausgestaltete Wellenlagervorrichtung mit Abhebevorrichtung
- Wellenlagervorrichtung hat eine wesentliche kleinere Vorrichtungsgeometrie als Pumpen mit zusätzlicher Abhebevorrichtung und vergrössert somit nicht die Pumpenlänge
- ist kostengünstig herzustellen
- erlaubt einfachen Austausch von Verschleissteilen

In Ausgestaltung der Erfindung umfasst die Wellenlagervorrichtung ein Wälzlager mit einem Innenring und einen Aussenring.

In einem für die Praxis besonders vorteilhaften Ausführungsbeispiel der Erfindung ist die Feder über einen Druckring am Aussenring des Wälzlagers abgestützt ist. Somit ist wie bereits erwähnt zwischen dem Wälzlager und der Feder ein Druckring am Lagergehäuse des Wälzlagers angeordnet, sodass die Federkraft über den Druckring auf das Wälzlager und somit auf die Pumpenwelle übertragen wird. Diese Anordnung wird bevorzugt bei Spiralfedern verwendet, während bei Verwendung von Tellerfedern die Kraft insbesondere direkt auf den Aussenring wirkt.

In einem weiteren speziellen Ausführungsbeispiel der Erfindung sind mindestens drei Federn, insbesondere in gleichem Abstand über den Umfang des Wälzlager und/oder des Druckrings angeordnet. Die Federn können zwischen dem Gehäuse und dem Wälzlager und/oder dem Druckring angeordnet sein, insbesondere über den Umfang des Wälzlagers und/oder des Druckrings verteilt und besonders vorteilhaft in gleichem Abstand voneinander angeordnet sein.

In einem weitern für die Praxis wichtigen Ausführungsbeispiel der Erfindung kann die Feder als Tellerfeder ausgebildet sein, welche die Pumpenwelle umschlingt.

In Ausgestaltung der Erfindung kann das Wälzlager ein Kugellager und/oder Zylinderrollenlager sein. Die Lager können offen, halboffen oder geschlossen sein. Je nach Art des Lagers wird ein Druckring benötigt um eine Druckfläche für die Kraftübertragung bereitzustellen.

Auch ist es möglich, dass das Kugellager in erster Linie ein Rillenkugellager und/oder ein Schrägkugellager ist.

In der Praxis kann die Kontaktfläche des Abhebeelements und/oder des Gegenelements beschichtet sein, insbesondere keramisch beschichtet sein. Somit kann der Verschleiss der beiden Elemente minimiert werden.

Dabei kann das Abhebeelement und/oder das Gegenelement und/oder der Druckring und/oder das Wälzlager einen faserverstärkten Verbundwerkstoff oder einen thermoplastischen Kunststoff, insbesondere ein Polyetherketon umfassen. Das Abhebeelement und/oder das Gegenelement und/oder der Druckring und/oder das Wälzlager können aus einem oder mehreren dieser Werkstoffe, im Speziellen auch aus einem Verbundwerkstoff hergestellt sein. Das Wälzlager kann insbesondere auch aus einer Keramik bestehen. Der Druckring besteht besonders bevorzugt aus Stahl.

Es versteht sich, dass auch die Kontaktfläche des Abhebeelements und/oder des Gegenelements mit einem Festkörperschmiermittel und/oder keramisch beschichtet sein kann. Dadurch werden die Gleiteigenschaften verbessert und der Verschleiss der beiden Elemente minimiert. Eine keramische Beschichtung kann insbesondere Siliziumcarbid sein.

Erfindungsgemäss wird weiter eine Pumpe mit einer Wellenlagervorrichtung gemäss der vorliegenden Erfindung vorgeschlagen. Hierbei umfasst die Wellenlagervorrichtung eine axial verschiebbare Pumpenwelle, ein Wälzlager und eine Feder. Das Wälzlager ist bevorzugt mit der Pumpenwelle verbunden und die Feder am Wälzlager angeordnet. Die Feder ist insbesondere so am Wälzlager angeordnet, dass die Federkraft F parallel zur Achse der Pumpenwelle wirkt. Die Feder ist somit so am Wälzlager angebracht, das eine Federkraft F auf den Aussenring des Wälzlagers wirkt, sodass ein Axialschub der Pumpenwelle im Ab- und/oder Anfahrzustand kompensiert werden kann. Durch die Federkraft der Feder sind ein an der Pumpenwelle befestigtes Abhebeelement und ein korrespondierendes Gegenelement im Ab- und/oder Anfahrzustand voneinander getrennt. Nach dem Anfahrzustand, wenn die Selbstschmierung der Pumpe angelaufen ist, bildet sich ein Schmiermittelfilm zwischen dem Abhebeelement und dem Gegenelement, sodass das Abhebeelement und Gegenelement im wesentlichen verschleissfrei unter Vermittlung eines sich dazwischen befindlichen Schmierfilms eines Schmierfluids aufeinander laufen können. In der Praxis kann die Pumpe eine Kreiselpumpe, insbesondere eine ein- oder mehrstufige Kreiselpumpe sein.

Erfindungsgemäss wird weiter eine Lagerung für eine Pumpe und eine Wellenlagervorrichtung vorgeschlagen. Hierbei umfassend die Lagerung ein mit einer axial verschiebbaren Pumpenwelle verbindbares Wälzlager eine Feder, welche so an dem Wälzlager angeordnet ist, dass in einem Einbauzustand der Lagerung mittels der Feder eine Federkraft auf das Wälzlager übertragbar ist.

Im Folgenden wird die Erfindung anhand von Ausführungsbeispielen unter Bezugnahme auf die Zeichnung näher erläutert.

Die schematischen Zeichnungen zeigen:
- Fig. 1: eine schematische Darstellung eines Wälzlagers;
- Fig. 2: ein erstes Ausführungsbeispiel der erfindungsgemässen Wellenlagervorrichtung;
- Fig. 3: einen Ausschnitt eines weiteren Ausführungsbeispiels der erfindungsgemässen Wellenlagervorrichtungr in verschiedenen Perspektiven;
- Fig. 4: einen Ausschnitt eines weiteren Ausführungsbeispiel der erfindungsgemässen Wellenlagervorrichtung;
- Fig. 5: ein weiteres Ausführungsbeispiel der erfindungsgemässen Wellenlagervorrichtung;
- Fig. 6: Längsschnitt der erfindungsgemässen Wellenlagervorrichtung in verschiedenen Betriebszuständen;

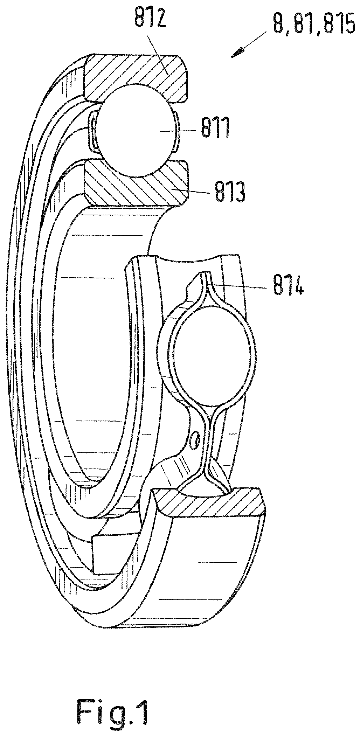

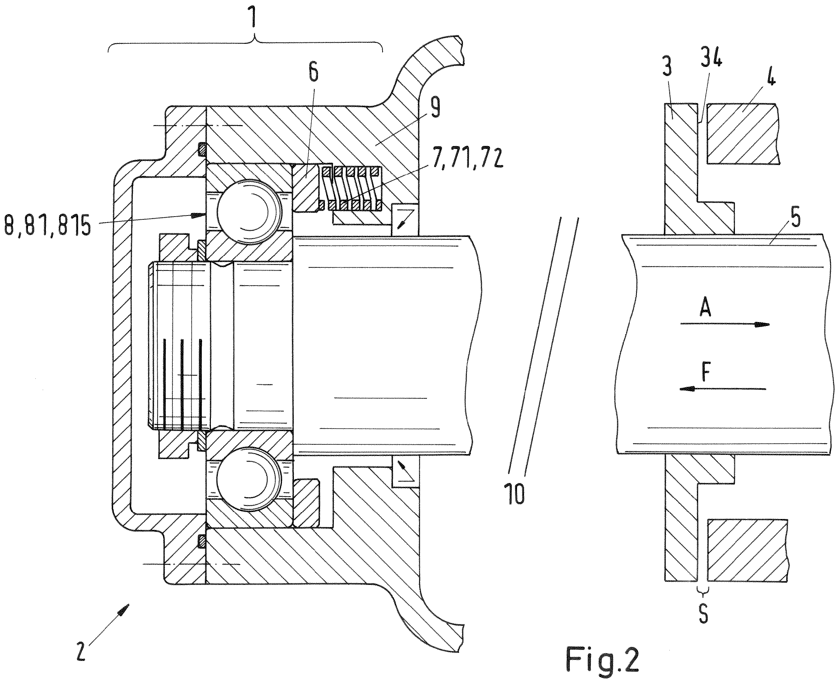

Fig. 1 zeigt eine schematische Darstellung eines Wälzlagers 8, 81, 815. Hierbei ist das Wälzlager 8 als Kugellager 81, insbesondere als Rillenkugellager 815 ausgebildet. Das Wälzlager 8, 81, 815 umfasst einen Aussenring 812, einen Innenring 813 und die dazwischen angeordneten Kugeln 811 mit Lagerkäfig 814. Der Innenring 813 ist drehfest mit einer Pumpenwelle 5 verbunden, weswegen wie Beispielhaft in Fig. 2 gezeigt die durch eine Feder 7, 71, 72 der Abhebevorrichtung hervorgerufene Kraft F auf den Aussenring 812 wirkt. Im Betriebszustand wird so, durch wirken der Kraft F auf den Aussenring 812, eine Verschiebung der Innenrings 813 und der drehfest gekoppelten Pumpenwelle 5 hervorgerufen. Dieses grundsätzliche Wirkprinzip zwischen Feder 7, 71, 72 und dem Wälzlager 8, 81, 82 ist zum Beispiel in Fig. 2 gezeigt, wobei in Fig. 1 auf Darstellung der Feder 7, 71, 72 verzichtet wurde.

Fig. 2 zeigt eine schematische Darstellung eines ersten Ausführungsbeispiels der erfindungsgemässen Wellenlagervorrichtung 1. Die Wellenlagervorrichtung 1 umfasst ein Wälzlager 8, 81, 815, einen Druckring 6 und eine Feder 7, 71, 72. Das Wälzlager 8, 81, 815 ist als Rillenkugellager 815 ausgebildet. Die Feder 7, 71, 72 ist so zwischen dem Gehäuse 9 und dem Druckring 6 angeordnet, dass eine Federkraft F so über den Druckring 6 auf das Rillenkugellager 815 wirkt, dass die Kontaktflächen 34 des Abhebeelements 3 und des Gegenelements 4 getrennt sind und ein Spalt S vorhanden ist. Im Betriebszustand wirkt die Federkraft F dem durch die Rotation der Laufräder entstehenden Axialschub A entgegen. Die Achsunterbrechung 10 zeigt, dass die Wellenlagervorrichtung 1 mit der intergierten Abhebevorrichtung an der Pumpenwelle 5 in beliebigem Abstand zu dem Abhebeelement 3 und dem Gegenelement 4 angeordnet sein kann. Die Feder 7, 71, 72 ist insbesondere so am Rillenkugellager 815 angeordnet, dass die Federkraft F parallel zur Achse der Pumpenwelle 5 wirkt. Die Feder 7, 71, 72 ist somit so am Rillenkugellager 815 angebracht, dass eine Federkraft F auf den Aussenring des Rillenkugellagers 815 wirkt, sodass ein Axialschub A der Pumpenwelle 5 im Ab- und/oder Anfahrzustand kompensiert werden kann. Durch die Federkraft F der Feder 7, 71, 72 sind ein an der Pumpenwelle 5 befestigtes Abhebeelement 3 und ein korrespondierendes Gegenelement 4 im Anfahrzustand und/oder Abfahrzustand voneinander getrennt. Nach dem Anfahrzustand, wenn die Selbstschmierung der Pumpe 2 angelaufen ist, bildet sich einer Schmiermittelfilm zwischen dem Abhebeelement 3 und dem Gegenelement 4, sodass das Abhebeelement 3 und Gegenelement 4 im wesentlichen verschleissfrei unter Vermittlung eines sich dazwischen befindlichen Schmierfilms eines Schmierfluids aufeinander laufen können.

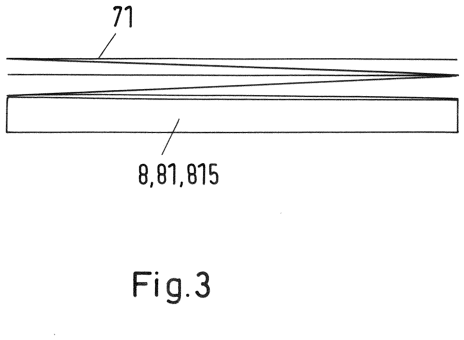

Fig. 3 zeigt einen Ausschnitt eines weiteren Ausführungsbeispiels der erfindungsgemässen Wellenlagervorrichtung 1 in verschiedenen Perspektiven. Die Feder 7, 71, 72 ist als Spiralfeder 71 ausgebildet, welche die Pumpenwelle 5 umschlingt. Die Federkraft F wirkt direkt auf den Aussenring 812 der Wellenlagervorrichtung 1 wodurch das Abhebeelement 3 und das Gegenelement 4 voneinander getrennt sind. Die Spiralfeder 71 ist zwischen dem Gehäuse 9 und dem Wälzlager 8, 81, 815 angeordnet. Die Spiralfeder 71 ist insbesondere so am Wälzlager 8,81, 815 angeordnet, dass die Federkraft F parallel zur Achse der Pumpenwelle 5 wirkt. Die Spiralfeder 71 ist somit so am Wälzlager 8, 81, 815 angebracht, dass eine Federkraft F auf den Aussenring des Wälzlagers 8, 81, 815 wirkt, sodass ein Axialschub A der Pumpenwelle 5 im Ab- und/oder Anfahrzustand kompensiert werden kann. Durch die Federkraft F der Spiralfeder 71 sind ein an der Pumpenwelle 5 befestigtes Abhebeelement 3 und ein korrespondierendes Gegenelement 4 im Anfahrzustand und/oder Abfahrzustand voneinander getrennt.

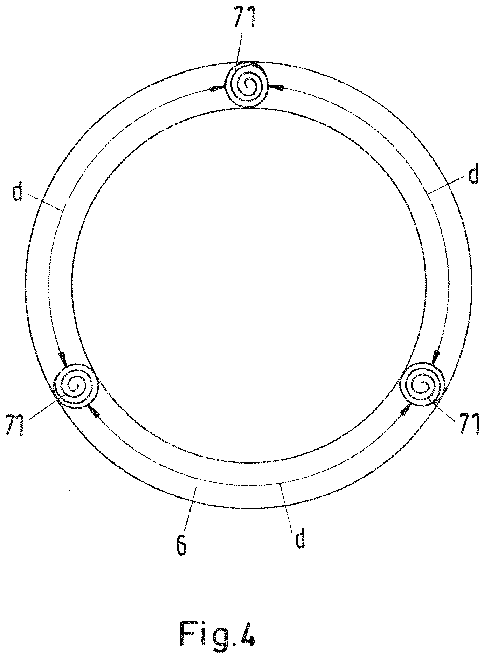

Fig. 4 zeigt einen Ausschnitt eines weiteren Ausführungsbeispiels der erfindungsgemässen Wellenlagervorrichtung 1. Die Federn 7, 71, 72 sind als einzelne Spiralfedern 71 ausgebildet und die Federkraft F wirkt über den Druckring 6 auf das Wälzlager 8, 81, 815 der Wellenlagervorrichtung 1 und somit auf die Pumpenwelle 5. Die Spiralfedern 71 sind über den Umfang des Druckrings 6 in gleichem Abstand d verteilt. Die Spiralfedern 71 können zwischen dem Gehäuse 9 und dem Wälzlager 8, 81, 815 und/oder dem Druckring 6 angeordnet sein. Die Spiralfedern 71 sind insbesondere so am Druckring 6 angeordnet, dass die Federkraft F parallel zur Achse der Pumpenwelle 5 wirkt. Die Spiralfedern 71 sind somit so am Druckring 6 angebracht, dass eine Federkraft F auf den Druckring 6 wirkt, sodass ein Axialschub A der Pumpenwelle 5 im Ab- und/oder Anfahrzustand kompensiert werden kann. Durch die Federkraft F der Spiralfedern 71 sind ein an der Pumpenwelle 5 befestigtes Abhebeelement 3 und ein korrespondierendes Gegenelement 4 im Anfahrzustand und/oder Abfahrzustand voneinander getrennt.

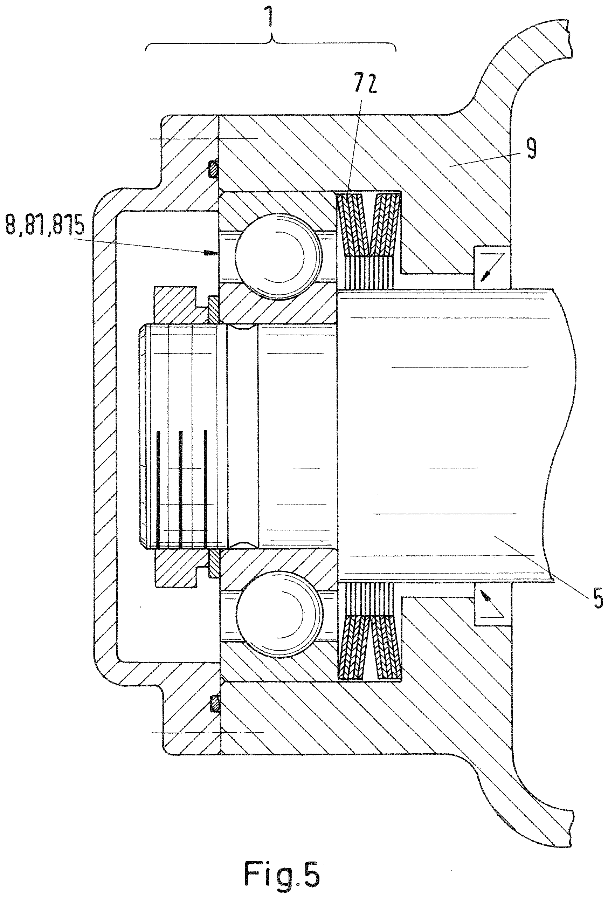

Fig. 5 zeigt ein weiteres Ausführungsbeispiel der erfindungsgemässen Wellenlagervorrichtung 1. Die Federn 7, 71, 72 sind Tellerfedern 72 ausgebildet und die Federkraft F wirkt auf das Wälzlager 8, 81, 815 der Wellenlagervorrichtung 1 und somit auf die Pumpenwelle 5. Die Tellerfedern 72 sind beispielhaft als zwei Paare mit jeweils fünf Tellerfedern 72 gegenläufig angeordnet. Der Fachmann versteht, dass auch andere Anordnungen mit mehr oder weniger Tellerfedern 72 und als verschiedene Anordnungsmuster möglich sind. Die Tellerfedern 72 sind zwischen dem Gehäuse 9 und dem Wälzlager 8, 81, 815 angeordnet. Die Tellerfedern 72 sind insbesondere so am Wälzlager 8, 81, 815 angeordnet, dass die Federkraft F parallel zur Achse der Pumpenwelle 5 wirkt. Die Tellerfedern 72 sind somit so am Wälzlager 8,81 angebracht, dass eine Federkraft F wirkt, sodass ein Axialschub A der Pumpenwelle 5 im Ab- und/oder Anfahrzustand kompensiert werden kann. Durch die Federkraft F der Tellerfedern 72 sind ein an der Pumpenwelle 5 befestigtes Abhebeelement 3 und ein korrespondierendes Gegenelement 4 im Anfahrzustand und/oder Abfahrzustand voneinander getrennt.

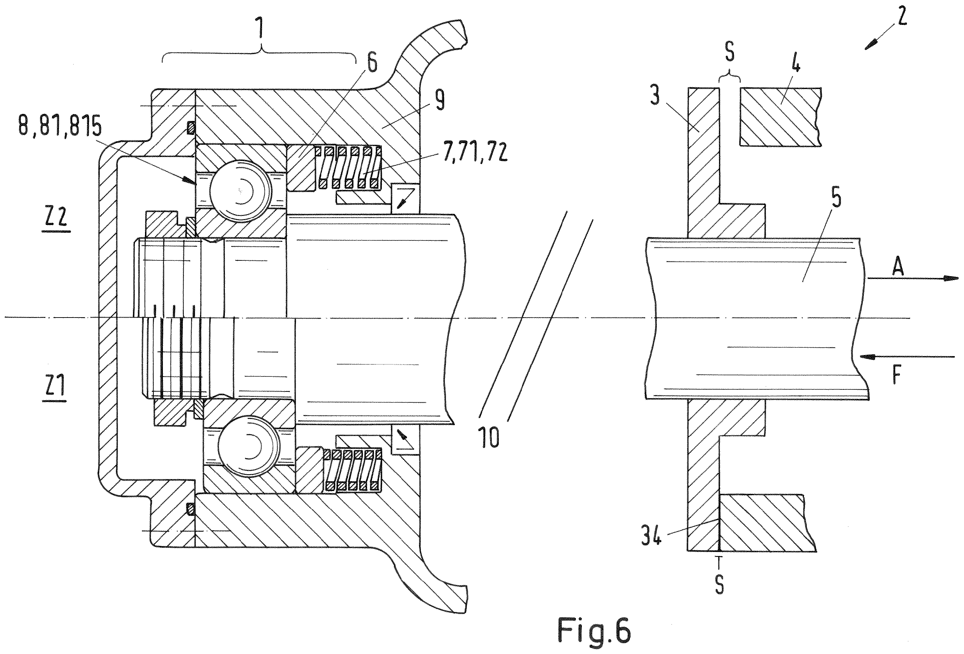

Fig. 6 zeigt eine schematische Darstellung eines Längsschnitts der erfindungsgemässen Wellenlagervorrichtung 1 in verschiedenen Betriebszuständen Z1, Z2. Die Wellenlagervorrichtung 1 hat denselben Aufbau wie zu Figur 1 beschrieben. Darstellungsgemäss befindet sich die Pumpe 2 auf der unteren Seite der Abbildung in einem Betriebszustand Z1. Der Betriebszustand Z1 beschreibt einen Betriebszustand in welchem der Axialschub A grösser als die Federkraft F ist. Auf der oberen Seite der Abbildung befindet sich die Pumpe 2 in einem Betriebszustand Z2, welcher dem Ab- und/oder Anfahrzustand und/oder den Einbauzustand entspricht und in welchem der Axialschub A kleiner als die Federkraft F ist. Im Betriebszustand Z2, wenn der Axialschub A noch nicht ausreicht um die Federkraft F zu überwinden, sind das Abhebeelement 3 und das Gegenelement 4 durch einen Spalt S so getrennt, dass sich ein Schmiermittelfilm zwischen den beiden Kontaktfläche 34 ausbilden kann und nach dem Anfahrzustand und/oder beim dem Abfahrzustand kein Verschleiss der beiden Bauelemente erfolgt. Wird der durch die Rotation der Laufräder verursachte Axialschub A grösser als die Federkraft F erfolgt eine Verschiebung der Pumpenwelle 5, und somit des Abhebeelements 3 in derart dass der Spalt S verkleinert wird. Durch die Verschiebung der Pumpenwelle 5 wird die Feder 7, 71, 72 komprimiert. Durch die Erniedrigung der Breite des Spaltes S können das Abhebeelement 3 und das Gegenelement 4 aufeinander gleiten und als Entlastungsvorrichtung für den Axialschub A der Laufräder fungieren.

## Patentansprüche

1. Wellenlagervorrichtung (1) für eine Pumpe (2), umfassend ein mit einer axial verschiebbaren Pumpenwelle (5) verbindbares Wälzlager (8, 81, 815), wobei eine Feder (7, 71, 72) so an dem Wälzlager (8, 81, 815) angeordnet ist, dass in einem Einbauzustand der Wellenlagervorrichtung (1) mittels der Feder (7, 71, 72) eine Federkraft (F) derart auf das Wälzlager (8, 81, 815) übertragbar ist, dass in einem Anfahrzustand und/oder Abfahrzustand der Pumpe (2), ein an der Pumpenwelle (5) befestigtes Abhebeelement (3) und ein korrespondierendes Gegenelement (4) voneinander getrennt sind,
**dadurch gekennzeichnet, dass** das Wälzlager (8, 81, 815) ein Radiallager ist.

2. Wellenlagervorrichtung (1) nach Anspruch 1, wobei die Wellenlagervorrichtung (1) ein Wälzlager (8, 81, 815) mit einem Innenring (813) und einen Aussenring (812) umfasst.

3. Wellenlagervorrichtung (1) nach einem der vorrangehenden Ansprüche, wobei die Feder (7, 71, 72), über einen Druckring (6) am Lagergehäuse des Wälzlagers (8, 81, 815) abgestützt ist.

4. Wellenlagervorrichtung (1) nach einem der vorrangehenden Ansprüche, wobei mindestens drei Federn (71), insbesondere in gleichem Abstand (d) über den Umfang des Wälzlagers (8, 81, 815) und/oder des Druckrings (6) angeordnet sind.

5. Wellenlagervorrichtung (1) nach Anspruch 1, 2 oder 3, wobei die Feder (7, 71, 72) als Tellerfeder (72) ausgebildet ist, welche um die Pumpenwelle (5) angeordnet ist.

6. Wellenlagervorrichtung (1) nach einem der vorrangehenden Ansprüche, wobei das Wälzlager (8, 81, 815) ein Kugellager (81, 815) und/oder Zylinderrollenlager ist.

7. Wellenlagervorrichtung (1) nach Anspruch 4, wobei das Kugellager (81, 815) ein Rillenkugellager (815) und/oder ein Schrägkugellager ist.

8. Wellenlagervorrichtung (1) nach einem der vorrangehenden Ansprüche, wobei die Kontaktflächen (34) des an der Pumpenwelle (5) befestigten Abhebeelementes (3) und des korrespondierenden Gegenelementes (4) beschichtet sind, insbesondere keramisch beschichtet sind.

9. Wellenlagervorrichtung (1) nach einem der vorrangehenden Ansprüche, wobei das Abhebeelement (3) und/oder das Gegenelement (4) und/oder ein Druckring (6) und/oder das Wälzlager (8, 81, 815) einen faserverstärkten Verbundwerkstoff oder einen thermoplastischen Kunststoff, insbesondere ein Polyetherketon umfassen.

10. Wellenlagervorrichtung (1) nach einem der vorrangehenden Ansprüche, wobei die Kontaktflächen (34) des an der Pumpenwelle (5) befestigten Abhebeelementes (3) und des korrespondierenden Gegenelementes (4) mit einem Festkörperschmiermittel beschichtet sind.

11. Pumpe (2) umfassend eine Wellenlagervorrichtung (1) nach einem der vorrangehenden Ansprüche.

## Claims

1. A shaft bearing device (1) for a pump (2), comprising an antifriction bearing (8, 81, 815), which can be connected to an axially displaceable pump shaft (5), wherein a spring (7, 71, 72) is arranged at the antifriction bearing (8, 81, 815) in such a way, that a spring force (F) can be transmitted to the antifriction bearing (8, 81, 815) by means of the spring (7, 71, 72) in a mounting condition of the shaft bearing device (1) in such a way, that a lifting element (3) attached to the pump shaft (5) and a corresponding counter element (4) are separated from each other in a starting state and/or in a shutdown state of the pump (2), **characterized in that** the antifriction bearing (8, 81, 815) is a radial bearing.

2. A shaft bearing device (1) according to claim 1, wherein the shaft bearing device (1) comprises an antifriction bearing (8, 81, 815) with an inner ring (813) and an outer ring (812).

3. A shaft bearing device (1) according to anyone of the preceding claims, wherein the spring (7, 71, 72) is supported via a pressure ring (6) at the bearing housing of the antifriction bearing (8, 81, 815).

4. A shaft bearing device (1) according to anyone of the preceding claims, wherein at least three springs (71), in particular at the same distance (d), are arranged over the circumference of the antifriction bearing (8, 81, 815) and/or the pressure ring (6).

5. A shaft bearing device (1) according to claim 1, 2 or 3, wherein the spring (7, 71, 72) is formed as a disk spring (72) arranged around the pump shaft (5).

6. A shaft bearing device (1) according to anyone of the preceding claims, wherein the antifriction bearing (8, 81, 815) is a ball bearing (81, 815) and/or a cylindrical roller bearing.

7. A shaft bearing device (1) according to claim 4, wherein the ball bearing (81, 815) is a grooved ball bearing (815) and/or an angular ball bearing.

8. A shaft bearing device (1) according to anyone of the preceding claims, wherein the contact surfaces (34) of the lifting element (3) attached to the pump shaft (5) and of the corresponding counter-element (4) are coated, in particular ceramic coated.

9. A shaft bearing device (1) according to anyone of the preceding claims, wherein the lifting element (3) and/or the counter element (4) and/or a pressure ring (6) and/or the antifriction bearing (8, 81, 815) comprise a fiber-reinforced compound material or a thermoplastic synthetic material, in particular a polyether ketone.

10. A shaft bearing device (1) according to anyone of the preceding claims, wherein the contact surfaces (34) of the lifting element (3) attached to the pump shaft (5) and of the corresponding counter-element (4) are coated with a solid lubricant.

11. A pump (2) comprising a shaft bearing device (1) according to anyone of the preceding claims.

## Revendications

1. Un dispositif de palier d'arbre (1) pour une pompe (2), comprenant un palier à roulement (8, 81, 815) pouvant être relié à un arbre de pompe (5) déplaçable axialement, dans lequel un ressort (7, 71, 72) est disposé sur le palier à roulement (8, 81, 815) de telle sorte que, dans un état monté du dispositif de palier d'arbre (1), une force de ressort (F) peut être transmise au palier à roulement (8, 81, 815) au moyen du ressort (7, 71, 72) de telle sorte que, dans un état de démarrage et/ou un état d'arrêt de la pompe (2), un élément de levage (3) fixé à l'arbre de pompe (5) et un contre-élément (4) correspondant sont séparés l'un de l'autre, **caractérisé en ce que** le palier à roulement (8, 81, 815) est un palier radial.

2. Un dispositif de palier d'arbre (1) selon la revendication 1, dans lequel le dispositif de palier d'arbre (1) comprend un palier à roulement (8, 81, 815) avec une bague intérieure (813) et une bague extérieure (812).

3. Un dispositif de palier d'arbre (1) selon l'une des revendications précédentes, dans lequel le ressort (7, 71, 72) est supporté sur le boîtier de palier du palier à roulement (8, 81, 815) par l'intermédiaire d'une bague de pression (6).

4. Un dispositif de palier d'arbre (1) selon l'une des revendications précédentes, dans lequel au moins trois ressorts (71) sont disposés, notamment à des distances égales (d) sur la circonférence du palier à roulement (8, 81, 815) et/ou de la bague de pression (6).

5. Un dispositif de palier d'arbre (1) selon la revendication 1, 2 ou 3, dans lequel le ressort (7, 71, 72) est formé comme un ressort à disque (72) qui est disposé autour de l'arbre de pompe (5).

6. Un dispositif de palier d'arbre (1) selon l'une des revendications précédentes, dans lequel le palier à roulement (8, 81, 815) est un pallier à billes (81, 815) et/ou un palier à rouleaux cylindriques.

7. Un dispositif de palier d'arbre (1) selon la revendication 4, dans lequel le pallier à billes (81, 815) est un palier à billes à gorge profonde (815) et/ou un palier à billes à contact angulaire.

8. Un dispositif de palier d'arbre (1) selon l'une des revendications précédentes, dans lequel les surfaces de contact (34) de l'élément de levage (3) fixé à l'arbre de pompe (5) et du contre-élément (4) correspondant sont revêtues, notamment en céramique.

9. Un dispositif de palier d'arbre (1) selon l'une des revendications précédentes, dans lequel l'élément de levage (3) et/ou le contre-élément (4) et/ou une bague de pression (6) et/ou le palier à roulement (8, 81, 815) comprennent un matériau composite renforcé par des fibres ou un matériau synthétique thermoplastique, notamment un polyéthercétone.

10. Un dispositif de palier d'arbre (1) selon l'une des revendications précédentes, dans lequel les surfaces de contact (34) de l'élément de levage (3) fixé à l'arbre de pompe (5) et du contre-élément (4) correspondant sont revêtues d'un lubrifiant solide.

11. Une pompe (2) comprenant un dispositif de palier d'arbre (1) selon l'une des revendications précédentes.
